# EUROPEAN PATENT APPLICATION

(11) **EP 1 722 580 A1**
(43) Date of publication of application: **15.11.2006**
(21) Application number: 05023473.1
(22) Date of filing: 27.10.2005
(51) Int. Cl.: H04Q 7/22, H04Q 7/38

(54) **System for delivery of warning information via SMS**

(30) Priority: 02.05.2005 SK 552005
(71) Applicant: Jankovic, Roman, 821 05 Bratislava (SK)
(72) Inventor: Jankovic, Roman, 821 05 Bratislava (SK)
(74) Representative: Brichtova, Tatiana

(57) **Abstract**

Interactive monitoring and processing block (2.1) of centre of prompt warning (2) is by communication means (4) connected with SMS centre (1.2) of operator (1) of GSM mobile network, which is by wireless connection connected with mobile devices (5) supporting SMS. Interactive monitoring and processing block (2.1) of centre of prompt warning (2) is also connected with database (2.2) of telephone numbers and with regional operators (3) of prompt warning via call centre (2.3). Interactive monitoring and processing block (2.1) of centre of prompt warning (2) is connected with communication block (2.4) of centre of prompt warning (2), which is by communication means (4) connected with identification centre (1.1) of operator (1) of GSM mobile network.

The result is an electronic system for realization of prompt warning information service in cases of local danger.

## Description

### Technical field

Technical solution concerns electronic connection of automated system for warning and identification systems by means of mobile communication stations activated in GSM networks. Technical solution comes under the field of electronic data transmission by mobile networks and automated data processing.

### Present state of art

At present, there exist authorization i.e. identification systems of mobile operators, which, on the basis of activation of SIM card in mobile telephone in connection with access point of GSM operator network i.e. BTS, identify location of an object using mobile telephone or of an object where communication device equipped with SIM card is located. The given systems are managed by every GSM operator and, at present, their cooperation in case of identification of objects or possibility of these systems' utilization for prompt warning service is not known.

In case of local danger, local radios or regional radio or television broadcasting are generally used in state administration as systems of prompt warning; in case of danger of greater extent, nationwide radio and television stations are used to broadcast warning message. The necessity of prompt warning against unforeseen events such as floods, fires, calamitous situations, traffic accidents, air pollution, etc. arises especially at municipal level.

At present, a relatively low number of functional local radios and in case of danger not always successful coordination of municipality or region with mass media appear to be a disadvantage of existing systems of prompt warning. It is generally the extent of success of prompt warning of citizens, who should be alerted or warned by means of mass media. The deciding factor in the given cases is mainly time and with increasing time, the extent of success of prompt warning decreases. Another factor is accessibility; that means possibility of citizens to acquire warning information in due time.

These facts led to an effort to supplement the existing systems of prompt warning with a system based on utilization of mobile technology. With current penetration of mobile telephones in Slovakia, it is possible to state that more than 91% of the population over 15 years uses mobile telephone. This very mobile telephone connected to network of a GSM operator can be used as terminal to mediate prompt warning information. The given facts led to creation of a conception of interactive communication with prompt warning system by means of SMS technology. The conception is based on technical connection of independent communication blocks with systems of GSM operators and solution of an interactive system of prompt warning by means of hardware and software application, which enables to enter and automatically distribute information containing notice or warning messages at regional and nationwide level. This hardware and software application enables to monitor status of prompt warning, to monitor delivery of information and reaction of a receiver to the notice or the warning message. The application is prepared by means of software interface and special communication blocks to connect with authorization, i.e. identification systems of GSM operators, which is actually identification of an object with activated SIM card within the territory of Slovakia. The result of this effort is a utility model described further, which solves connection of electronic system for realization of prompt warning information service.

### Ratio of invention

Possibilities of mobile technologies stated above led to creation of electronic system connection of prompt warning information service according to technical solution, the core of which is that, in general, a device to receive information is a mobile station activated in network of a GSM operator. In practice, the most frequent case is a mobile telephone available to general public. Network of a GSM operator is used as communication system between citizens, who need to be informed or warned, hereafter only objects, and the system of processing SMS demands. The basis is a hardware and software application as an interactive monitoring and processing block, which enables data monitoring and which processes demands of operators of prompt warning from individual regions of Slovakia and automatically creates and sends SMS containing information categorized according to urgency. SMS are sent on the basis of created databases of telephone numbers divided according to municipalities and regions of Slovakia or, in case of connection with identification systems of GSM operators, according to telephone numbers of objects located in the area subject to warning.

Interactive monitoring and processing block is located at hardware media in the centre of prompt warning. Operator of the system of prompt warning in the region has the possibility to follow the status of delivery of individual warning messages, monitors the system of returned SMS, has the possibility to interactively communicate with individual objects and to inform responsible authorities on the state of warning of population.

Interactive monitoring and processing block in case of an SMS demand identifies telephone number of the endangered object and on the basis of the content of SMS acquires the necessary information from the object. On the basis of information's evaluation, it can automatically send further necessary information such as availability of rescue service, availability of information centres, availability of humanitarian help, possibility of shelter, information on protection from toxic substances, etc. Interactive monitoring and processing block is connected with information database of mobile telephone numbers by means of data network and application interface.

Database is created by regional operators on the basis of collection of information from citizens. Database of mobile telephone numbers is divided according to regions, as far as the level of villages. On the basis of criteria entered by an operator, interactive monitoring and processing block selects a certain group of telephone numbers from the database, to which a warning SMS is subsequently sent. The whole transaction is recorded from specification of criteria through communication with objects to conclusion of the operation. The content of SMS, which is sent to the telephone number of an object, is in the text form without diacritics in a maximum amount of 160 characters.

Advantage of SMS warning message is that even in case it is not delivered to mobile telephone, SMS warning message remains in SMS centre of operator and in case object activates telephone in network of GSM operator, this warning SMS is delivered to his mobile device.

Electronic system connection of prompt warning is prepared for extension and connection with authorization i.e. identification system of GSM operators, whereby it is possible to distribute information containing notice or warning to all mobile devices activated in the network and located in endangered locality. This is possible to secure by identification of mobile devices at so-called BTS in the given locality.

Electronic system connection of prompt warning based on mobile communication networks enables to promptly deliver a warning message to mobile telephone connected to network and to inform citizens about possible danger.

In the electronic system connection of prompt warning information service is the centre of prompt warning located independently from the means of GSM operators and is connectable with the GSM operators of the European Union on the bases of communication standards.

Finally the warning messages sent from the centre of prompt warning are delivered by SMS service to end devices for the reception of warning messages, i.e. to mobile phones.

Advantages of connection of automated system for realization of the system of prompt warning by means of SMS according to this technical solution lie in that it enables to utilize communication system with high penetrability and sophisticated interactive monitoring and processing block for management of SMS communication to send warning messages and information to selected group in an instant.

The presented electronic system connection involves solution for receiving and sending warning SMS. The proposed complex system can extend existing ways of prompt warning such as radio, TV or local radio.

The proposed electronic system connection is in the time of registration in pilot operation and is secured by independent communication blocks and modern software equipment.

### Drawings overview

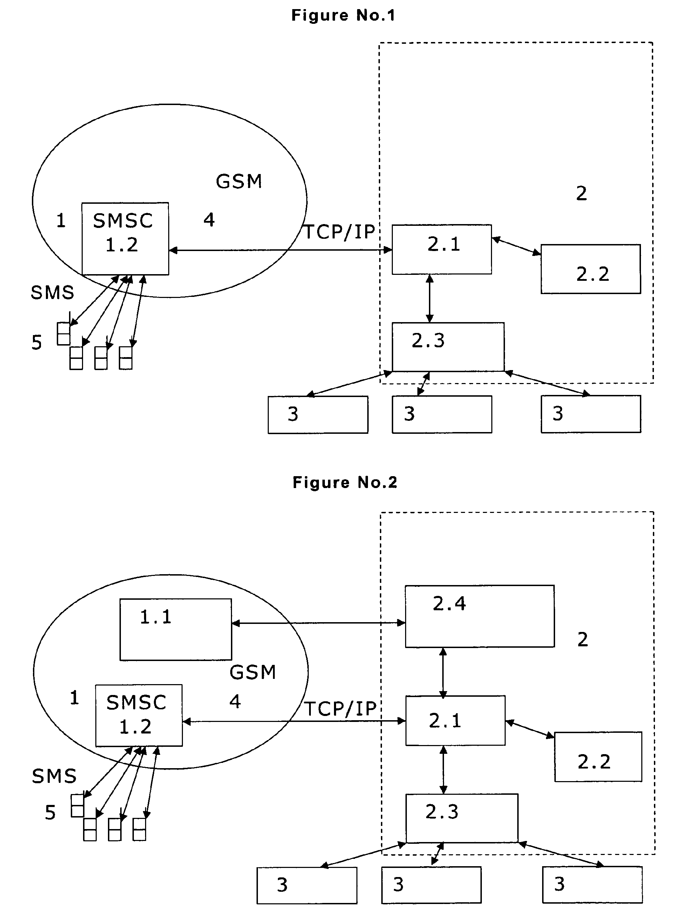

Electronic system prompt warning information service according to technical solution shall be explained further on drawing, where scheme of connection of automated system for standard realization of prompt warning service by means of SMS technology, communication interfaces and interactive monitoring and processing block is depicted on figure No. 1. Scheme of connection of automated system for realization of prompt warning service extended by identification centre of an operator is depicted on figure No. 2.

Examples of the realization of invention

### Example 1

This example describes electronic connection of automated system for standard realization of prompt warning service by means of SMS technology according to technical solution together with description of activity depicted on the enclosed picture 1. Connection of the automated system also utilizes existing technological devices. The principal element of the connection is the interactive monitoring and processing block (2.1), which is necessary to create warning SMS and to process SMS demands.

The proposed communication model secures the process of delivering and processing SMS by means of expressly defined communication means. The basis of the communication model is system of processing SMS by means of interactive monitoring and processing block (2.1), which is located at hardware media in centre (2) of prompt warning. Receipt of warning and information SMS and dispatch of SMS demands are realized by means of a mobile device (5) for example mobile telephone, which is in communication with SMS centre (1.2) of operator and transmission means are created by operator (1) of GSM mobile network.

Processing of SMS is realized in interactive monitoring and processing block (2.1) for processing SMS demands of a customer. SMS centre (1.2) of operator (1) of GSM mobile network is connected by means of fixed link (4) or wireless connection with interactive monitoring and processing block (2.1) in centre (2) of prompt warning. Connection is realized by TCP/IP protocols. This connection secures transmission of information such as MSISDN, telephone number and content of SMS.

Interactive monitoring and processing block (2.1) is connected with information database (2.2) of telephone numbers, from which, on the basis of selection criteria, groups are selected and created to which warning SMS are sent. On the basis of received SMS interactive monitoring and processing block (2.1) uses pre-defined rules to generate SMS reply for the given SMS demand on the basis of script or via call centre (2.3) warns regional operators (3). Parameters for SMS reply are selected from information database (2.2). Information database (2.2) contains information about objects, addresses, telephone numbers, availability of rescue service, lists of solution for critical situations, etc. Information database (2.2) of mobile telephone numbers is divided according to regions as far as village level.

On the basis of criteria entered by operator, interactive monitoring and processing block (2.1), after communication with regional operator (3), in case of local rescue operations of a very small extent, selects from it a certain group of telephone "home" numbers registered in the given endangered region, to which warning SMS is subsequently sent. The whole transaction is recorded from specification of criteria through communication with objects to conclusion of the operation.

### Example 2

This example describes electronic connection of automated system for extended realization of prompt warning service by means of SMS technology according to technical solution together with description of activity depicted on the enclosed picture 1. Connection of the automated system also utilizes existing technological devices. The principal element of the connection is monitoring and processing block (2.1), which is necessary to create warning SMS and to process SMS demands.

The proposed communication model secures the process of delivering and processing SMS by means of expressly defined communication means. The basis of the communication model is system of processing SMS by means of interactive monitoring and processing block (2.1), which is located at hardware media in centre (2) of prompt warning. Receipt of warning and information SMS and dispatch of SMS demands are realized by means of a mobile device (5) for example a mobile telephone, which is in communication with SMS centre (1.2) of operator and transmission means are created by operator (1) of GSM mobile network.

Processing of SMS is realized in interactive monitoring and processing block (2.1) for processing SMS demands of a customer. SMS centre (1.2) of operator (1) of GSM mobile network is connected by means of fixed link (4) or wireless connection with interactive monitoring and processing block (2.1) in centre (2) of prompt warning. Connection is realized by TCP/IP protocols. This connection secures transmission of information such as MSISDN, telephone number and content of SMS.

Centre (2) of prompt warning also contains communication block (2.4), which is by communication means connected with interactive monitoring and processing block (2.1) as well as with identification centre (1.1) of operator (1) of GSM mobile network.

Interactive monitoring and processing block (2.1) is connected with information database (2.2) of telephone numbers, from which, on the basis of selection criteria, groups are selected and created to which warning SMS are sent. On the basis of received SMS interactive monitoring and processing block (2.1) uses pre-defined rules to generate individual SMS reply for the given SMS demand on the basis of script or via call centre (2.3) warns regional operators (3). Parameters for SMS reply are selected from information database (2.2). Information database (2.2) contains information about objects, addresses, telephone numbers, availability of rescue service, lists of solution for critical situations, etc. Information database (2.2) of mobile telephone numbers is divided according to regions as far as village level.

On the basis of criteria entered by regional operators (3), interactive monitoring and processing block (2.1), after communication with regional operator (3), in case of extensive natural or ecological disasters or such, employs into the process identification centre (1.1) of operator (1) of GSM mobile network, which, in addition, localizes another group of telephone "guest" numbers located in the given endangered region, to which warning SMS is subsequently sent. The whole transaction is recorded from specification of criteria through communication with objects to conclusion of the operation.

The centre of prompt warning (2) is located independently from the means of GSM operators (2) and based on communication standards is connectable with the GSM operators of the European Union.

A data channel of warning information by SMS services exists between the centre of prompt warning (2) and the end mobile devices (5).

## Claims

1. Electronic system connection of prompt warning information service, **characterized in that** interactive monitoring and processing block (2.1) of centre of prompt warning (2) is by communication means (4) connected with SMS centre (1.2) of operator (1) of GSM mobile network, which is by wireless connection connected with mobile devices (5) supporting SMS; interactive monitoring and processing block (2.1) of centre of prompt warning (2) is also connected with database (2.2) of telephone numbers and with regional operators (3) of prompt warning via call centre (2.3).

2. Electronic system connection of prompt warning information service according to claim 1, **characterized in that** warning information sent from centre of prompt warning (2) are delivered by means of SMS service and end devices for receiving warning messages are mobile telephones (5).

3. Electronic system connection of prompt warning information service according to claim 1, **characterized in that** centre of prompt warning (2) is located independently of GSM operator's media and is on the basis of communication standards connectable with existing GSM operators operating within the European Union.

4. Electronic system connection of prompt warning information service according to claim 1, **characterized in that** interactive monitoring and processing block (2.1) of centre of prompt warning (2) is connected with communication block (2.4) of centre of prompt warning (2), which is by communication means (4) connected with identification centre (1.1) of operator (1) of GSM mobile network.
